# Europäisches Patentamt

# European Patent Office

# Office européen des brevets

(11) Veröffentlichungsnummer: **0 054 768**
**B1**

(12) # EUROPÄISCHE PATENTSCHRIFT

(45) Veröffentlichungstag der Patentschrift:
20.03.85

(51) Int. Cl.⁴: **A 23 J 7/00**, C 07 F 9/10

(21) Anmeldenummer: 81110043.7

(22) Anmeldetag: 01.12.81

(54) Verfahren zur Abtrennung von acylierten Phospholipiden aus diese enthaltenden Phosphatidylcholin-Produkten.

(30) Priorität: 13.12.80 DE 3047012

(43) Veröffentlichungstag der Anmeldung:
30.06.82 Patentblatt 82/26

(45) Bekanntmachung des Hinweises auf die Patenterteilung:
20.03.85 Patentblatt 85/12

(84) Benannte Vertragsstaaten:
AT BE CH FR GB IT LI LU NL SE

(56) Entgegenhaltungen:
DE - A - 2 915 614

CHEMICAL ABSTRACTS, Band 82, Nr. 12, 25. Juni 1958, Spalte 10613b, Columbus, Ohio, USA
CHEMICAL ABSTRACTS, Band 82, Nr. 23, 9. Juni 1975, Seite 526, Nr. 155382t, Columbus, Ohio, USA

(73) Patentinhaber: A. Nattermann & Cie. GmbH,
Nattermannallee 1, D-5000 Köln 30 (DE)

(72) Erfinder: Günther, Bernd-Rainer, Dr., Auf der Höhe 31,
D-5010 Bergheim-Fliesteden (DE)

(74) Vertreter: Redies, Bernd, Dr. rer. nat. et al, Redies,
Redies, Türk & Gille Brucknerstrasse 20,
D-4000 Düsseldorf 13 (DE)

## Beschreibung

Die Erfindung betrifft ein neues Verfahren zur Abtrennung von acylierten Phospholipiden, insbesondere acyliertem Phosphatidylethanolamin und gegebenenfalls Öl aus diese enthaltenden Phosphatidylcholin-Produkten durch Chromatographie an Kieselgel unter Herstellung von hochreinem Phosphatidylcholin.

Im Handel sind Phosphatidylcholin-Produkte bekannt, die acylierte Phospholipide, insbesondere acetyliertes Phosphatidylethanolamin enthalten und als Emulgatoren eingesetzt werden (DE-OS 1 492 974, DE-OS 1 543 937). Diese Produkte werden durch Behandlung von Phosphatidylethanolaminen enthaltenden natürlichen Phosphatid-Gemischen mit z.B. Essigsäureanhydrid bei erhöhter Temperatur erhalten (vgl. z.B. DE-PS 1 812 204, DE-OS 2 147 327, US-PS 3 359 201, US-PS 3 704 254). Die Acylierung ist jedoch auch mit anderen Acylierungsmitteln möglich.

Phosphatidylcholin wird in beträchtlichem Umfang in der pharmazeutischen Industrie eingesetzt. Für diesen Verwendungszweck ist hochreines Phosphatidylcholin notwendig. Insbesondere muss das Phosphatidylcholin von den in natürlichen Phosphatid-Gemischen anwesenden Mono-, Di- und Triglyceriden (Öl) wie auch von den acylierten Phosphatidylethanolaminen oder anwesendem nicht acyliertem Phosphatidylethanolamin frei sein.

Die Acylierung von Phosphatidylethanolaminen enthaltenden natürlichen Phosphatid-Gemischen wurde auch schon zur Trennung von Öl und Phosphatidylethanolamin vom Phosphatidylcholin eingesetzt [vgl. Fett, Seifen, Anstrichmittel 73 (1971) S. 643–651]. Hierbei wird der Umstand ausgenutzt, dass Phosphatidylcholin und Phosphatidylethanolamin in Aceton unlöslich sind, während Öl und acetyliertes Phosphatidylethanolamin in Aceton löslich sind, so dass Öl und Phosphatidylethanolamin in seiner acetylierten Form vom unlöslichen Phosphatidylcholin extrahiert werden kann. Der Nachteil dieses Verfahrens besteht jedoch darin, dass aus Aceton bei diesen Vorgängen bekanntlich geringe Mengen Acetonfolgeprodukte wie Mesityloxid, Diacetonalkohol, Phoron u.a. gebildet werden, diese Produkte toxisch sind und daher bei Anwendung des auf diesem Weg gewonnenen Phosphatidylcholins auf pharmazeutischem Sektor entfernt werden müssen und die Entfernung dieser toxischen und wegen ihres charakteristischen Eigengeruchs störend wirkenden Substanzen sehr aufwendig, zum Teil sogar unmöglich ist. Ausserdem ist die acetonische Extraktion mit einem Anstieg der Peroxide verbunden, deren nachteilige physiologische Einflüsse bekannt sind. Ein weiterer Nachteil dieses Verfahrens besteht darin, dass bei Acetylierung mit Essigsäureanhydrid infolge der Zwitternatur des Phosphatidylethanolamins und der bei der Reaktion gebildeten Essigsäure, die die Aminogruppe unter Salzbildung zur Ammoniumgruppe verwandelt, nicht vollständig abläuft, während das zur Gewährleistung der vollständigen Acetylierung als Protonenakzeptor eingesetzte tertiäre Amin physiologisch nicht unbedenklich ist. Ausserdem ist auch dieses Verfahren zur Abtrennung der Begleitstoffe des Phosphatidylcholins sehr aufwendig.

Aufgabe der vorliegenden Erfindung ist die Schaffung eines vereinfachten Verfahrens zur Abtrennung von acylierten Phospholipiden wie acetyliertem Phosphatidylethanolamin und gegebenenfalls vorhandenem unacetyliertem Phosphatidylethanolamin und/oder Öl aus diese enthaltenden Phosphatidylcholin-Produkten unter Herstellung von hochreinem Phosphatidylcholin.

Das erfindungsgemässe Verfahren zur Abtrennung von acylierten Phospholipiden und gegebenenfalls anwesenden unacylierten Phospholipiden und/oder Öl aus diese enthaltenden Phosphatidylcholin-Produkten ist dadurch gekennzeichnet, dass man das Phosphatidylcholin-Produkt, unter Abtrennung gegebenenfalls vorhandener unlöslicher Bestandteile, in einem $C_{1-4}$-Niederalkanol, der bis zu 20 Vol.% Wasser enthalten kann, oder in einem solchen Gemisch aus mehreren $C_{1-4}$-Niederalkanolen löst, diese Lösung bei einer erhöhten Temperatur im Bereich von 60 bis 90°C auf eine Säule aus Kieselgel gibt, bei dieser Temperatur mit einem gegebenenfalls bis zu 20 Vol.% Wasser enthaltendem $C_{1-4}$-Niederalkanol oder einem solchen Gemisch aus mehreren $C_{1-4}$-Niederalkanolen die Säule eluiert und dabei einen Vorlauf mit dem abzutrennenden acylierten Phosphatidyllipid und gegebenenfalls anwesenden unacylierten Phospholipiden und/oder Öl und getrennt hiervon den das reine Phosphatidylcholin enthaltenden Restlauf sammelt und das Lösungsmittel aus dem Restlauf in üblicher Weise abtrennt.

Vorzugsweise wird die Aufgabe auf die Kieselgel-Säule und ihre Eluierung bei einer Temperatur von 60 bis 70°C durchgeführt. Bevorzugt wird als Eluierungsmittel das verwendete Lösungsmittel eingesetzt, was das Verfahren besonders einfach gestaltet. Bevorzugter $C_{1-4}$-Niederalkanol ist Ethanol.

Die Menge Vorlauf hängt von dem eingesetzten Phosphatidylcholin-Produkt ab. Durch einfache analytische Methoden kann festgestellt werden, ab wann das Eluat frei von den abzutrennenden Begleitprodukten des Phosphatidylcholins ist und praktisch nur noch Phosphatidylcholin enthält. Nach der Erfahrung macht der Vorlauf etwa 20 bis 25% des Gesamtvolumens an Eluat aus. Falls erwünscht, kann auch das Lösungsmittel aus dem Vorlauf abgetrennt werden und das so erhaltene Produkt oder der Vorlauf einschliesslich des Lösungsmittels einer Weiterverarbeitung zugeführt werden.

Als Kieselgel können übliche Produkte für die Chromatographie verschiedener Körnung oder auch gepresstes Kieselgel eingesetzt werden, welches aktiviert oder desaktiviert sein kann. Bevorzugt werden neutrale Kieselgel-Produkte.

Das erfindungsgemässe Verfahren kann bei Normaldruck oder auch Überdruck durchgeführt werden. Ein ganz besonderer Vorteil des erfindungsgemässen Verfahrens besteht darin, dass man das Kieselgel nach erfolgter Chromatographie immer wieder einsetzen kann. Sämtliche Verunreinigungen bzw. abzutrennende Begleitstoffe werden im Vorlauf aufgefangen; nach dem Hauptlauf verbleibt nur noch eine geringe Restbelegung von Phosphatidylcholin.

Ein weiterer Vorteil des Kieselgels liegt in der sehr hohen Belastbarkeit dieses Sorptionsmittels. So werden in einer säulenchromatographischen Trennung mit 100 Teilen Kieselgel ca. 60 Teile Feststoff aus dem Alkohol löslichen Ausgangsprodukt getrennt.

Das erfindungsgemässe Verfahren hat schliesslich noch den Vorteil, dass auch dann hochreines Phosphatidylcholin erhalten wird, wenn bei der Acylierung nicht die Gesamtmenge Phosphatidylethanolamin acyliert wurde und/oder das bei der Acylierung erhaltene Produkt noch Mono-, Di- und/oder Triglyceride (Öl) enthält. Auch diese Begleitstoffe werden bei dem erfindungsgemässen Verfahren vollständig vom Phosphatidylcholin getrennt und fallen im Vorlauf ohne Verlängerung desselben an.

Beispiele
Analytik
Die Phosphatide wurden auf dünnschichtchromatographischem Weg analysiert. Der Ölgehalt wurde dem Dialysierbaren gleichgesetzt. Das Wasser wurde nach Karl Fischer und der Restethanolgehalt gaschromatographisch bestimmt.

Säulenchromatographie
Es wurde eine Doppelmantelchromatographiersäule (Innendurchmesser 4,5 cm, Höhe 37 cm) eingesetzt. Der Säule vorgeschaltet war ein Wärmeaustauscher, um eine gleiche Säulen- und Aufgabetemperatur zu gewährleisten. Die Säule wurde mit einer Aufschlämmung von 200 g Kieselgel (Merck) in dem jeweils angegebenen Lösungsmittel gefüllt. Nach erfolgter Chromatographie kann das Kieselgel wieder benutzt werden.

Ausgangsmaterial
Als Ausgangsmaterial wurde ein Sojarohphosphatid mit 20% PC, 14% PE und 30% Öl eingesetzt.

Beispiel 1
400 g Sojarohphosphatid werden mit 24 g Essigsäureanhydrid eine Stunde bei 50°C verrührt. Die flüchtigen Bestandteile werden dann im Vakuum an einem Rotationsverdampfer abdestilliert. Der Rückstand wird bei 50°C mit 800 g 95-Vol.%igem Ethanol extrahiert. Das Gemisch wird auf Raumtemperatur abgekühlt und die klare ethanolische Oberphase abgetrennt. Das Ethanol wird im Vakuum abdestilliert. Der Rückstand (92 g) wird analysiert.

| | |
|---|---|
| Phosphatidylcholin (PC): | 40% |
| Phosphatidylethanolamin (PE): | 1% |
| N-Acetyl-PE: | 12% |
| Öl: | 20% |

Beispiel 2
Es wird eine Säulenchromatographie bei 65°C durchgeführt. Säulenauftrag: 90 g Feststoff aus Beispiel 1 in 810 g 95-Vol.%igem Ethanol. Elutionsmittel: 95-Vol.%iges Ethanol für 4 l Eluat.

Nach 1,4 l Vorlauf werden insgesamt 2,6 l Restlauf aufgefangen. Der Restlauf wird eingedampft und analysiert.

| | |
|---|---|
| Feststoffausbeute: | 19% d.Th. |
| PC-Gehalt: | 93% |
| PE-Gehalt: | <1% |
| N-Acetyl-PE-Gehalt: | <1% |
| Öl-Gehalt: | <1% |
| PC-Ausbeute, bezogen auf Ausgangsfeststoff: | 44% d.Th. |

**Patentansprüche**

1. Verfahren zur Abtrennung von acylierten Phospholipiden und gegebenenfalls anwesenden unacylierten Phospholipiden und/oder Öl aus diese enthaltenden Phosphatidylcholin-Produkten, dadurch gekennzeichnet, dass man das Phosphatidylcholin-Produkt, unter Abtrennung gegebenenfalls vorhandener unlöslicher Bestandteile, in einem $C_{1-4}$-Niederalkanol, der bis zu 20 Vol.% Wasser enthalten kann, oder einem solchen Gemisch aus mehreren $C_{1-4}$-Niederalkanolen, löst, diese Lösung bei einer erhöhten Temperatur im Bereich von 60 bis 90°C auf eine Säule aus Kieselgel gibt, bei dieser Temperatur mit einem gegebenenfalls bis zu 20 Vol.-% Wasser enthaltendem $C_{1-4}$-Niederalkanol oder einem solchen Gemisch aus mehreren $C_{1-4}$-Niederalkanolen die Säule eluiert und dabei einen Vorlauf mit den abzutrennenden Produkten und getrennt hiervon den das reine Phosphatidylcholin enthaltenden Restlauf sammelt und das Lösungsmittel aus dem Restlauf in üblicher Weise abtrennt.

2. Verfahren gemäss Anspruch 1, dadurch gekennzeichnet, dass die Aufgabe der Lösung des zu reinigenden Phosphatidylcholin-Produktes auf die Kieselgel-Säule und ihre Eluierung bei einer Temperatur im Bereich von 60 bis 70°C durchgeführt wird.

3. Verfahren gemäss Anspruch 1 oder 2, dadurch gekennzeichnet, dass man zur Lösung des zu reinigenden Phosphatidylcholin-Produktes und zur Eluierung das gleiche Lösungsmittel verwendet.

4. Verfahren gemäss Ansprüchen 1 bis 3, dadurch gekennzeichnet, dass man als $C_{1-4}$-Niederalkanol Ethanol verwendet.

**Claims**

1. Process for the separation of acylated phospholipides and eventually present unacylated phospholipides and/or oil from phosphatidyl choline products comprising the latter, characterized in that the phosphatidyl choline product is solved, by separating eventually present insoluble components, in a $C_{1-4}$ lower alkanol which may comprise up to 20 vol.% of water, or such a mixture comprising several $C_{1-4}$ lower alkanols, adding said solution at increased temperature in a range from 60 to 90°C to a silica column, eluating said solution at this temperature with a $C_{1-4}$ lower alkanol comprising eventually up to 20 vol.% of water, or such a mixture comprising several $C_{1-4}$ lower alkanols by collecting a first running comprising the products to be separated and separately therefrom the residual running comprising the pure phosphatidyl choline, by separating in the usual manner the solvent from the residual running.

2. Process as defined in claim 1, characterized in that the object of solution of the phosphatidyl choline to be purified on the silica column and its eluation is carried out at a temperature of from 60 to 70°C.

3. Process as defined in either of claims 1 or 2, characterized in that for the solution of the phosphatidyl choline product and for its eluation is used the same solvent.

4. Process as defined in either of claims 1 to 3, characterized in that as $C_{1-4}$ lower alkanol is used ethanol.

## Revendications

1. Procédé de séparation de phospholipides acylés et de phospholipides non acylés et/ou d'huile éventuellement présents à partir de produits de phosphatidylcholine les contenant, caractérisé en ce qu'on dissout le produit de phosphatidylcholine, avec séparation des composants insolubles éventuellement présents, dans un alcanol inférieur en $C_1$ à $C_4$ qui peut contenir jusqu'à 20% d'eau en volume, ou un mélange de ce genre constitué de plusieurs alcanols inférieures en $C_1$ à $C_4$, en ce qu'on introduit cette solution à une température élevée dans un intervalle de 60° à 90°C dans une colonne de gel de silice, en ce qu'on élue la colonne à cette température avec un alcanol inférieur en $C_1$ à $C_4$ contenant éventuellement jusqu'à 20% d'eau en volume ou un mélange de ce genre constitué de plusieurs alcanols inférieurs en $C_1$ à $C_4$ et en ce qu'on recueille des têtes avec les produtis à séparer et, de façon séparée, le reste des coupes contenant la phosphatidylcholine pure et en ce qu'on sépare le solvant du reste des coupes de manière habituelle.

2. Procédé selon la revendication 1, caractérisé en ce qu'on effectue le chargement de la solution du produit de phosphatidylcholine à purifier dans la colonne de gel de silice et son élution à une température située dans un intervalle de 60° à 70°C.

3. Procédé selon l'une des revendications 1 et 2, caractérisé en ce qu'on utilise le même solvant pour dissoudre le produit de phosphatidylcholine à purifier et pour éluer.

4. Procédé selon l'une des revendications 1 à 3, caractérisé en ce qu'on utilise comme alcanol en $C_1$ à $C_4$ l'éthanol.